# FASCICULE DE BREVET EUROPEEN

(11) **EP 2 892 743 B1**
(45) Date de publication et mention de la délivrance du brevet: **16.05.2018**
(21) Numéro de dépôt: 13759459.4
(22) Date de dépôt: 27.08.2013
(51) Int. Cl.: B60H 1/22, H05B 1/02

(54) **DISPOSITIF DE CHAUFFAGE ÉLECTRIQUE DE FLUIDE POUR VÉHICULE AUTOMOBILE, CIRCUIT DE CHAUFFAGE ET APPAREIL DE CHAUFFAGE ET/OU DE CLIMATISATION ASSOCIÉS**
VORRICHTUNG ZUR ELEKTRISCHEN ERWÄRMUNG EINER FLÜSSIGKEIT FÜR EIN KRAFTFAHRZEUG UND ZUGEHÖRIGER HEIZKREISLAUF SOWIE HEIZ-UND/ODER KLIMAANLAGE
DEVICE FOR ELECTRICALLY HEATING FLUID FOR A MOTOR VEHICLE, AND ASSOCIATED HEATING CIRCUIT AND HEATING AND/OR AIR CONDITIONING DEVICE

(30) Priorité: 06.09.2012 FR 1258353
(43) Date de publication de la demande: 15.07.2015
(73) Titulaire: Valeo Systemes Thermiques, 78321 Le Mesnil-Saint-Denis (FR)
(72) Inventeur: PIERRON, Frédéric, F-78120 Rambouillet (FR); PUZENAT, Bertrand, F-78180 Montigny le Bretonneux (FR); TELLIER, Laurent, F-75116 Paris (FR)
(74) Mandataire: Metz, Gaëlle
(86) Numéro de dépôt international: PCT/EP2013/067670
(87) Numéro de publication internationale: WO 2014/037242

(56) Documents cités:
- EP-A1- 0 562 438
- EP-A2- 0 096 834
- DE-A1- 10 239 494
- FR-A1- 2 891 688
- GB-A- 2 205 455

## Description

L'invention concerne un dispositif de chauffage électrique de fluide pour véhicule automobile. L'invention concerne aussi un circuit de chauffage comprenant un tel dispositif de chauffage. L'invention s'applique plus particulièrement aux appareils de chauffage et/ou de climatisation de véhicules automobiles comportant un tel dispositif de chauffage.

De façon habituelle, le réchauffage de l'air destiné au chauffage de l'habitacle peut s'avérer inadapté ou insuffisant pour garantir un chauffage de l'habitacle d'un véhicule automobile, ainsi qu'au désembuage et au dégivrage, est assuré par le passage d'un flux d'air à travers un échangeur thermique, plus précisément par un échange thermique entre le flux d'air et un fluide. Il s'agit généralement du fluide de refroidissement dans le cas d'un moteur thermique.

Toutefois, un mode de chauffage rapide et efficace de l'habitacle du véhicule, en particulier pour assurer un réchauffement de l'habitacle ou le dégivrage ou le désembuage du véhicule avant utilisation est souhaitée.

En outre, dans le cas d'un véhicule électrique, la fonction de chauffage n'est plus réalisée par la circulation du fluide de refroidissement dans l'échangeur thermique. On peut cependant prévoir un circuit d'eau pour le chauffage de l'habitacle mais ce mode de chauffage peut aussi s'avérer inadapté ou insuffisant pour garantir un chauffage rapide et efficace de l'habitacle du véhicule.

Par ailleurs, afin de réduire l'encombrement et le coût d'un circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant est dans ce cas, utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures. Par exemple lorsque la température d'air extérieur est trop basse, cet air ne peut pas être utilisé comme source d'énergie thermique.

Afin de réchauffer l'air, une solution connue consiste à adjoindre à l'échangeur thermique ou au circuit d'eau ou encore à la boucle de climatisation, un dispositif de chauffage électrique additionnel.

Le dispositif de chauffage électrique additionnel peut être adapté pour chauffer un fluide, tel que le fluide de refroidissement du moteur thermique, ou l'eau du circuit d'eau de chauffage de l'habitacle du véhicule électrique ou encore le fluide réfrigérant de la boucle de climatisation.

De façon connue, le dispositif de chauffage électrique additionnel comporte un ou plusieurs corps chauffant en contact avec le fluide à chauffer.

Un corps chauffant présente des moyens électriques de chauffe par exemple, une ou des résistances chauffantes réalisées par sérigraphie sous forme de pistes résistives sur la surface externe du corps chauffant.

Ce corps chauffant est contrôlé par un moyen de commande comportant par exemple un interrupteur de courant électrique pour contrôler l'alimentation électrique du ou des corps chauffant(s) auquel(s) il est relié.

L'interrupteur est relié électriquement aux moyens électriques de chauffe pour autoriser ou interdire l'alimentation électrique des moyens électriques de chauffe.

Cependant, il peut arriver qu'un tel dispositif de chauffage dépasse une température critique reflétant une surchauffe du dispositif de chauffage. La température critique est par exemple comprise entre 150°C et 250°C.

Un tel phénomène se produit fréquemment en cas de chauffe à vide du dispositif, c'est à dire lorsqu'il n'y a plus assez de fluide ou plus de fluide du tout.

Généralement, l'alimentation des pistes résistives n'est interrompue uniquement que lorsque la ou les pistes résistives, qui sont par exemple réalisées par sérigraphie, fondent. Or, la température de fusion d'une piste résistive est de l'ordre de 500°C et donc dépasse la température critique d'un dispositif de chauffage.

Afin d'éviter les risques de surchauffe du dispositif de chauffage, qui peuvent conduire à une détérioration ou à un incendie de l'appareil dans lequel est monté le dispositif de chauffage, des systèmes permettant de déconnecter les moyens électriques de chauffe en cas de surchauffe ont été développés. Le document FR 2 891 688 A1, qui est considéré comme l'art antérieur le plus proche, divulgue une telle solution. Selon une solution connue, l'interrupteur est modifiable entre une configuration d'alimentation pour autoriser l'alimentation électrique des moyens électriques de chauffe et dans une configuration de coupure pour interdire l'alimentation électrique des moyens électriques de chauffe, et un anneau de contactage en matériau plastique est disposé à proximité des moyens électriques de chauffe.

Cet anneau de contactage est une pièce rapportée qui permet de maintenir l'interrupteur dans la configuration d'alimentation électrique, et entraîne le passage de l'interrupteur à la configuration de coupure en cas de surchauffe du corps chauffant.

En effet, l'anneau de contactage disposé à proximité des moyens électriques de chauffe est chauffé par les moyens électrique de chauffe en fonctionnement. Le matériau plastique de l'anneau de contactage est adapté pour fondre au moins partiellement lorsqu'une zone au moins des moyens électriques de chauffe dépasse un seuil critique de température et pour entraîner alors le passage de l'interrupteur de sa configuration d'alimentation à sa configuration de coupure.

Cependant, cette solution requiert une pièce supplémentaire pour réaliser cette fonction d'interruption de courant.

De plus, une telle solution peut s'avérer lente et peu fiable après que le corps chauffant a atteint la température critique.

L'invention a donc pour objectif de proposer une solution simple et rapide pour couper l'alimentation électrique des moyens électriques de chauffe lorsque le corps chauffant atteint un seuil de température critique prédéfini.

À cet effet, l'invention a pour objet un dispositif de chauffage électrique de fluide pour véhicule automobile, comprenant :
- au moins un corps chauffant présentant au moins une résistance chauffante réalisée sous la forme d'une piste résistive,
- un moyen de commande électrique du corps chauffant relié électriquement à la piste résistive, et
- au moins un moyen d'interruption de courant lorsque la température du corps chauffant atteint un seuil de température prédéfini,
caractérisé en ce que :
- au moins une piste résistive est interrompue et présente au moins deux portions de piste, et en ce que
- ledit au moins un moyen d'interruption de courant est agencé sur le corps chauffant entre deux portions d'une piste résistive interrompue et comprend au moins un thermofusible.

Le thermofusible est apte à fondre au moins partiellement lorsque la zone du corps chauffant au niveau du thermofusible atteint le seuil de température prédéfini.

La fonction d'interruption de courant en cas de surchauffe du corps chauffant est donc réalisée par une fonction fusible directement agencée sur le corps chauffant en interrompant la ou les pistes résistives. Ceci permet une coupure simple et rapide dès que le corps chauffant atteint le seuil de température critique.

De plus, cette solution permet de s'affranchir d'une pièce supplémentaire rapportée par rapport aux éléments présents pour le fonctionnement du dispositif de chauffage.

Le dispositif de chauffage électrique peut en outre comporter une ou plusieurs caractéristiques suivantes, prises séparément ou en combinaison :
- la piste résistive est réalisée par sérigraphie sur la surface externe du corps chauffant ;
- le corps chauffant est sensiblement cylindrique ;
- la piste résistive s'étend au moins partiellement sur la surface externe du corps chauffant ;
- le corps chauffant comprend deux résistances chauffantes réalisées sous la forme de deux pistes résistives imbriquées l'une dans l'autre ;
- le thermofusible est réalisé sous la forme d'une bande en matériau thermofusible présentant une première extrémité agencée en contact avec une première portion de piste et une deuxième extrémité agencée en contact avec la deuxième portion de piste ;
- le moyen d'interruption de courant comprend un thermofusible agencé en contact avec une première portion de piste et un moyen de rappel élastique relié d'une part au thermofusible et d'autre part à une deuxième portion de piste ;
- le thermofusible est réalisé sous la forme d'une soudure ;
- la température de fusion du thermofusible est comprise entre 150°C et 250°C, par exemple de l'ordre de 160°C ;
- un module de chauffe comprend un noyau et le corps chauffant est agencé de façon à entourer le noyau pour définir un circuit de guidage du fluide autour du noyau ;
- ledit dispositif de chauffage électrique comprend deux modules de chauffe agencés côte à côte et comprenant un boîtier d'entrée de fluide et un boîtier de sortie de fluide communiquant respectivement avec les deux modules de chauffe.

L'invention concerne aussi un circuit de chauffage d'un habitacle de véhicule caractérisé en ce qu'il comprend un dispositif de chauffage tel que défini précédemment.

L'invention concerne également un appareil de chauffage et/ou climatisation pour véhicule automobile, caractérisé en ce qu'il comprend au moins un dispositif de chauffage électrique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue en perspective d'un dispositif de chauffage électrique de fluide pour véhicule automobile selon la présente invention, partiellement représenté en transparence,
- la figure 2 représente le dispositif de chauffage électrique de la figure 1 sans un boîtier de sortie de fluide,

- la figure 3 est une vue en perspective éclatée d'un module de chauffe du dispositif de chauffage selon un premier mode de réalisation,
- la figure 4 représente une vue de détail partielle du moyen de commande du dispositif de chauffage de la figure 1,
- la figure 5 est une vue en perspective d'un corps chauffant et un moyen d'interruption de courant selon un deuxième mode de réalisation agencé sur le corps chauffant,
- la figure 6 est une vue de côté représentant de façon schématique le moyen d'interruption de courant de la figure 5,
- la figure 7 représente de façon schématique une vue en perspective d'un corps chauffant et un moyen d'interruption de courant selon un troisième mode de réalisation agencé sur le corps chauffant,
- la figure 8 est une vue en perspective éclatée d'un module de chauffe du dispositif de chauffage selon un quatrième mode de réalisation,
- la figure 9 représente de façon schématique un dispositif de chauffage selon le quatrième mode de réalisation,
- la figure 10 représente de façon schématique un corps chauffant et un moyen d'interruption de courant selon le quatrième mode de réalisation
- la figure 11a illustre de façon schématique et partielle un connecteur électrique dans une première position d'alimentation en courant selon une variante du quatrième mode de réalisation représenté aux figures 8 à 10,
- la figure 11b illustre de façon schématique et partielle le connecteur électrique de la figure 11a,
- la figure 12 représente de façon schématique un corps chauffant et un moyen d'interruption de courant selon un cinquième mode de réalisation comprenant un thermofusible maintenant mécaniquement un connecteur électrique contre le corps chauffant,
- la figure 13 est une vue schématique et partielle représentant un moyen d'interruption de courant selon un sixième mode de réalisation,
- la figure 14a est une vue schématique illustrant un moyen de raccord électrique comprenant un moyen d'interruption de courant dans une première position d'alimentation en courant, selon un septième mode de réalisation, et,
- la figure 14b est une vue schématique illustrant le moyen de raccord électrique de la figure 14a dans une deuxième position de coupure d'alimentation.

Dans ces figures, les éléments sensiblement identiques portent les mêmes références.

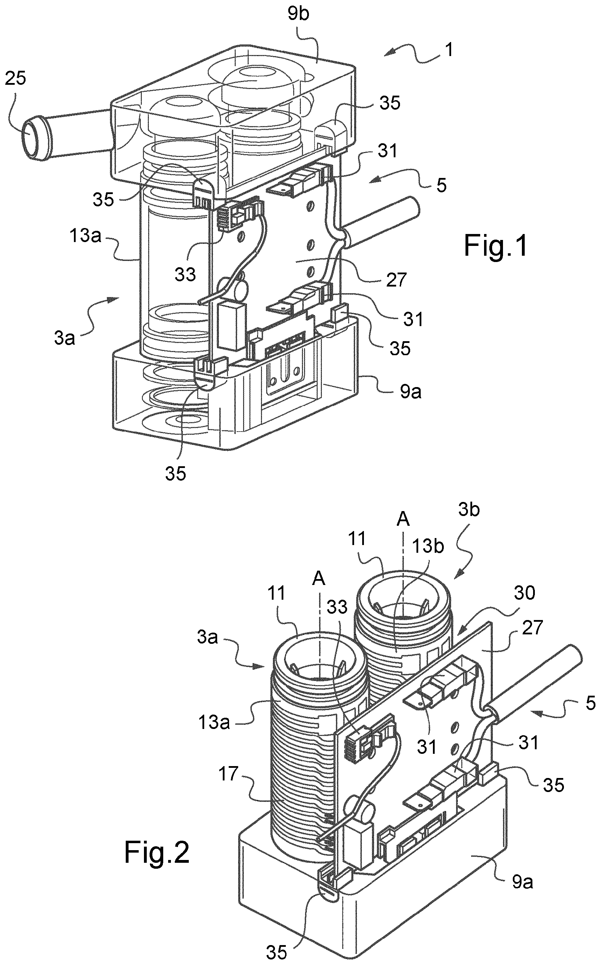

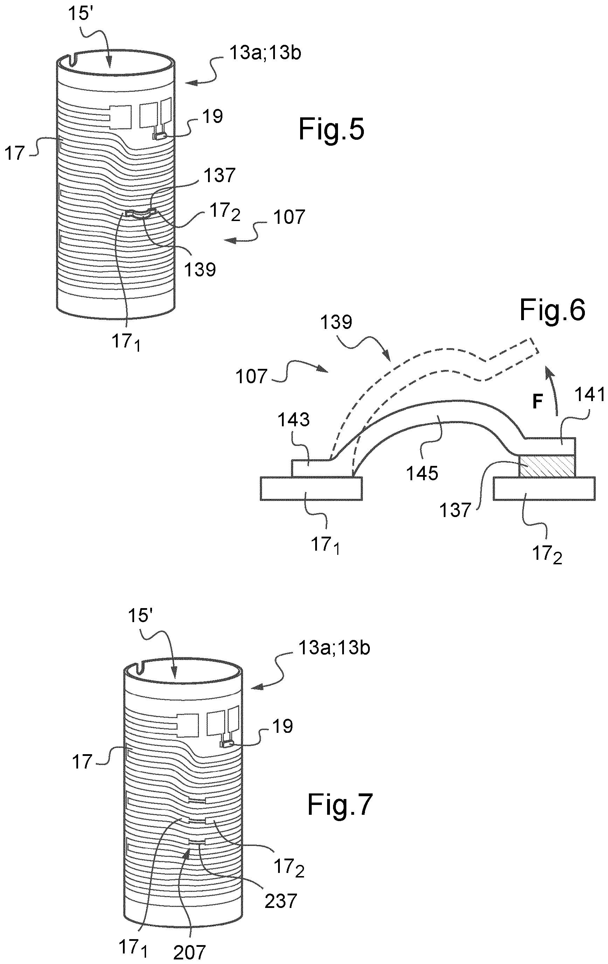

Les éléments des figures 5 et 6 correspondant à des éléments des figures 1 à 4 portent les mêmes références précédées d'une centaine 1.

Les éléments de la figure 7 correspondant à des éléments des figures 1 à 4 portent les mêmes références précédées d'une centaine 2.

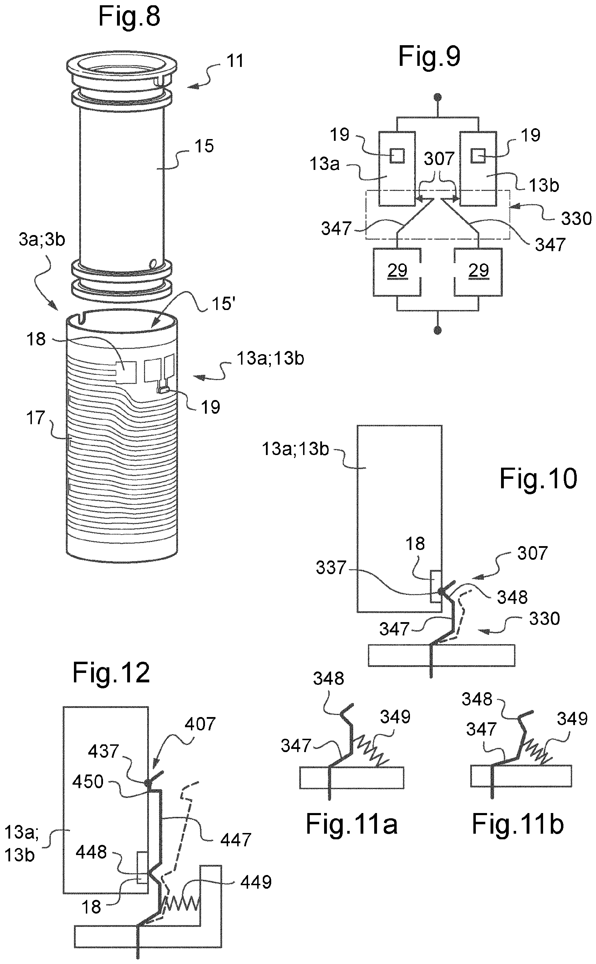

Les éléments des figures 9 à 11b correspondant à des éléments des figures 1 à 4 portent les mêmes références précédées d'une centaine 3.

Les éléments de la figure 12 correspondant à des éléments des figures 1 à 4 portent les mêmes références précédées d'une centaine 4.

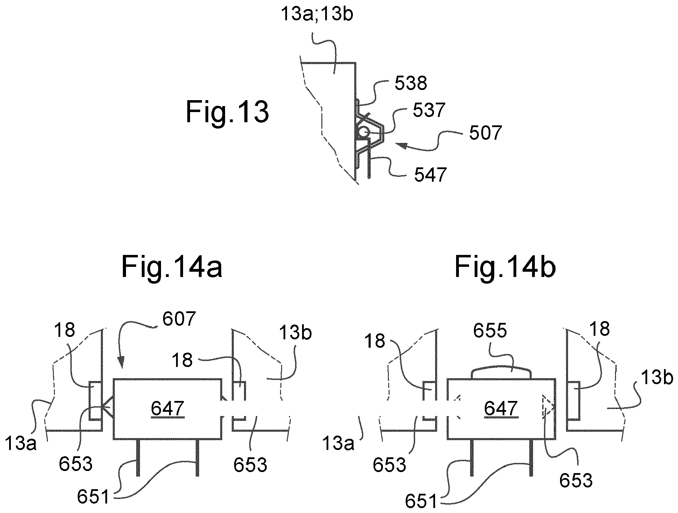

Les éléments de la figure 13 correspondant à des éléments des figures 1 à 4 portent les mêmes références précédées d'une centaine 5.

Et, les éléments des figures 14a, 14b correspondant à des éléments des figures précédentes portent les mêmes références précédées d'une centaine 6.

La figure 1 représente un dispositif de chauffage électrique 1 de fluide pour véhicule automobile pour un appareil de chauffage et/ou climatisation.

Le dispositif de chauffage électrique 1 est par exemple un dispositif de chauffage additionnel permettant de chauffer de l'eau avant son entrée dans un circuit de chauffage d'eau pour le chauffage de l'habitacle d'un véhicule électrique.

Selon un autre exemple, le dispositif de chauffage électrique 1 est disposé en amont d'un évaporateur d'une boucle de climatisation apte à fonctionner en mode pompe à chaleur, de façon à chauffer le fluide réfrigérant.

Selon encore un autre exemple, le dispositif de chauffage électrique 1 est agencé en amont d'un échangeur thermique utilisant le fluide de refroidissement d'un moteur thermique comme fluide caloporteur.

On pourrait aussi prévoir un tel dispositif de chauffage électrique 1 en amont d'un échangeur thermique destiné à la régulation thermique d'un dispositif de stockage de l'énergie électrique, parfois qualifié d'ensemble de batteries, pour un véhicule à propulsion électrique ou hybride.

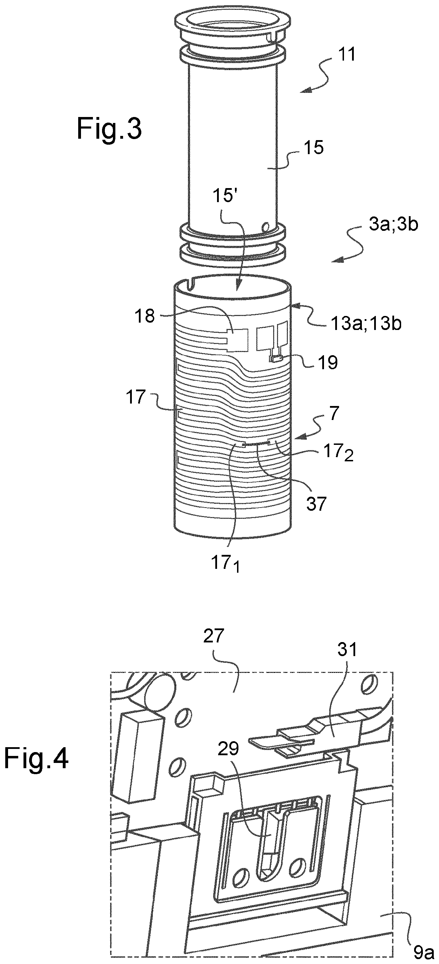

Le dispositif de chauffage électrique 1 représenté comprend :
- un premier module de chauffe 3a et un deuxième module de chauffe 3b,
- un moyen de commande 5 pour contrôler l'alimentation électrique des modules de chauffe 3a, 3b,
- un moyen d'interruption de courant 7 (illustré en figure 3),
- une entrée de fluide, telle qu'un boîtier d'entrée de fluide 9a, et
- une sortie de fluide 9b, telle qu'un boîtier de sortie de fluide 9b.

Bien entendu on peut prévoir que le dispositif de chauffage électrique comprenne un seul module de chauffe, ou plus de deux modules de chauffe selon les besoins.

En se référant aux figures 2 et 3, un module de chauffe 3a, 3b comporte :
- un noyau 11, par exemple creux, et
- un corps chauffant 13a, 13b.

Selon l'exemple illustré, un corps chauffant 13a, 13b est réalisé sous la forme d'une enveloppe entourant le noyau 11.

Le noyau 11 et le corps chauffant 13a, 13b sont par exemple sensiblement cylindriques.

Le noyau 11 et le corps chauffant 13a, 13b peuvent être concentriques.

Un module de chauffe 3a, 3b présente donc une forme générale sensiblement cylindrique définie par le corps chauffant 13a, 13b.

Le noyau 11 et le corps chauffant 13a, 13b définissent un circuit de guidage du fluide à chauffer, tel que du liquide, entre le noyau 11 et le corps chauffant 13a, 13b. Le circuit de guidage est défini autour de la surface externe 15 du noyau 11, il est donc à l'extérieur du noyau 11 et à l'intérieur du corps chauffant 13a ou 13b. En d'autres termes, la surface externe 15 du noyau 11 et la surface interne 15' du corps chauffant 13a ou 13b associé, définissent un volume de circulation du fluide à chauffer autour du noyau 11. Le fluide provenant du boîtier d'entrée de fluide 9a peut circuler dans ce volume de circulation, puis vers le boîtier de sortie 9b.

Selon le mode de réalisation illustré sur les figures 1 et 2, chaque module de chauffe 3a, 3b comprend un circuit de guidage du fluide entre le noyau 11 et le corps chauffant 13a, 13b respectif.

Selon une variante de réalisation non représentée, la surface extérieure 15 du noyau 11 peut comporter une rainure hélicoïdale qui permet de définir avec le corps chauffant 13a, 13b correspondant, le cheminement du fluide autour du noyau 11.

Bien entendu, le circuit de guidage défini peut être totalement cylindrique comme dans l'exemple illustré sur les figures 1 à 3. Dans ce cas, il n'y a pas de rainure hélicoïdale sur la surface extérieure 15 du noyau 11.

D'autres formes de rainures peuvent également être envisagées.

Par ailleurs, un corps chauffant 13a, 13b, présente au moins un moyen électrique de chauffe tel qu'une résistance chauffante 17. Cette résistance chauffante 17 peut être réalisée sous la forme d'une piste résistive 17. Selon l'exemple de réalisation représenté, un corps chauffant 13a, 13b présente deux moyens électriques de chauffe réalisés sous la forme de deux pistes résistives 17.

Plus précisément, les deux pistes résistives 17 s'étendent par exemple parallèlement entre elles sur la hauteur du corps chauffant 13a, 13b. Les deux pistes résistives 17 sont pas exemple imbriquées l'une dans l'autre, superposées l'une sur l'autre ou entrelacées. Les pistes résistives 17 s'étendent au moins partiellement sur la surface externe du corps chauffant 13a, 13b.

Les pistes résistives 17 sont par exemple réalisées par sérigraphie sur la surface externe du corps chauffant 13a, 13b, c'est-à-dire sur la surface opposée à la surface du corps chauffant 13a, 13b en regard du noyau 11. Les pistes résistives 17 sont donc hors du circuit de guidage du fluide à chauffer. Selon la présente invention, la chaleur produite par la résistance est directement transmise au fluide à chauffer à travers la paroi du corps chauffant 13a ou 13b correspondant, ce qui minimise les pertes thermiques et réduit l'inertie thermique du dispositif, le fluide peut dès lors être chauffé rapidement.

Le moyen de commande 5 contrôle les corps chauffants 13a, 13b en contrôlant l'alimentation des résistances chauffantes 17, réalisées sous forme de pistes résistives 17 dans cet exemple.

À cet effet les pistes résistives 17 sont connectées au moyen de commande 5. On prévoit pour ce faire des bornes de connexion 18 (cf figure 3) électriquement reliées aux extrémités des pistes résistives 17. Le moyen de commande 5 est connecté électriquement à ces bornes de connexion 18.

En outre, on peut prévoir un capteur de température 19 pour mesurer la température d'un corps chauffant 13a, 13b associé. Il peut s'agir d'une thermistance, telle qu'une sonde « CTN » pour Coefficient de Température Négatif ou « NTC » pour l'anglais « Negative Temperature Coefficient », dont la résistance diminue de façon uniforme avec la température. Ce capteur de température 19 peut être brasé ou soudé sur la surface externe du corps chauffant 13a, 13b associé.

Dans ce cas, le moyen de commande 5 contrôle l'alimentation des résistances chauffantes en fonction d'une consigne de chauffage et de la température mesurée par le capteur de température 19.

Par ailleurs, les modules de chauffe 3a, 3b sont par exemple identiques.

Les deux modules de chauffe 3a, 3b sont selon le mode de réalisation illustré disposés côte à côte de façon sensiblement parallèle.

Bien entendu, d'autres agencements sont envisageables, par exemple en disposant les deux modules de chauffe 3a, 3b bout à bout dans le sens longitudinal des modules de chauffe 3a, 3b.

La disposition côte à côte permet de réduire l'encombrement du dispositif de chauffage 1 dans le sens longitudinal. De plus, cet agencement présente une faible inertie de chauffe et une faible perte de charge.

Les modules de chauffe 3a, 3b présentent respectivement deux extrémités longitudinalement opposées : une extrémité d'entrée et une extrémité de sortie. Les extrémités d'entrée sont reçues dans une cavité respective du boîtier d'entrée de fluide 9a et de façon analogue les extrémités de sortie sont reçues dans une cavité respective du boîtier de sortie de fluide 9b.

Un canal d'entrée du fluide est formé dans le boîtier d'entrée de fluide 9a. Le canal d'entrée communique avec le circuit de guidage du premier module de chauffe 3a et avec le circuit de guidage du deuxième module de chauffe 3b.

Le boîtier d'entrée de fluide 9a présente à titre d'exemple une base sensiblement parallélépipédique munie d'une première cavité et d'une deuxième cavité respectivement de forme cylindrique à fond sphérique pour recevoir les extrémités d'entrée respectives des modules de chauffe 3a, 3b.

Le boîtier d'entrée de fluide 9a peut comporter également une tubulure saillante d'admission de fluide 23 du dispositif de chauffage électrique 1. Le canal d'entrée est raccordé fluidiquement à la tubulure d'admission 23 en parallèle aux deux cavités du boîtier d'entrée de fluide 9a.

De façon similaire, un canal de sortie du fluide est formé dans le boîtier de sortie de fluide 9b et communique avec le circuit de guidage du premier module de chauffe 3a et avec le circuit de guidage du deuxième module de chauffe 3b.

Comme on peut le voir sur la figure 1, le boîtier de sortie de fluide 9b présente sensiblement la même forme que le boîtier d'entrée de fluide 9a. Il présente ainsi une base sensiblement parallélépipédique munie des deux cavités pour recevoir les extrémités de sortie des modules de chauffe 3a, 3b et d'une tubulure saillante de sortie de fluide 25 du dispositif de chauffage électrique 1, destinée à être raccordée fluidiquement à un circuit de fluide chauffé.

Les boîtiers d'entrée 9a et de sortie 9b sont selon cet exemple raccordés symétriquement, aux deux extrémités opposées des modules de chauffe 3a, 3b.

L'écoulement du fluide s'effectue ainsi depuis la tubulure d'admission de fluide 23 du boîtier d'entrée 9a, dans le canal d'entrée, puis en parallèle dans les circuits de guidage des modules de chauffe 3a, 3b et ressort dans le canal de sortie du boîtier de sortie 9b puis par la tubulure de sortie 25.

L'écoulement du fluide se fait de façon sensiblement parallèle à l'axe longitudinal A d'un module de chauffe 3a, 3b. On parle d'écoulement linéaire.

Par ailleurs, en ce qui concerne le moyen de commande 5 du corps chauffant 13a, 13b, il comporte un support de circuit électrique 27.

Le support de circuit électrique 27 est par exemple une carte à circuit imprimé (ou PCB en anglais pour "Printed circuit board").

Ce support de circuit électrique 27 porte des composants électroniques et/ou électriques. On peut citer notamment un ou des interrupteurs de courant électrique 29 (cf figure 4) pour contrôler l'alimentation électrique des corps chauffants 13a, 13b. Les interrupteurs de courant électrique 29 sont respectivement électriquement reliés aux corps chauffants 13a, 13b des modules de chauffe respectifs 3a, 3b, via le support de circuit électrique 27.

Selon un exemple de réalisation, l'alimentation électrique d'un corps chauffant 13a, 13b est contrôlée par un interrupteur de courant électrique respectif 29. L'ouverture et/ou la fermeture de l'interrupteur de courant électrique 29 peut être pilotée par un microcontrôleur.

On prévoit deux interrupteurs de courant électrique 29 par sécurité afin de s'assurer qu'en cas de panne de l'un d'entre eux, l'autre interrupteur puisse assurer l'alimentation d'un corps chauffant 7a ou 7b.

Il est également envisageable de prévoir un seul interrupteur de courant électrique 29 pour la commande des deux corps chauffants 13a, 13b.

Outre les interrupteurs de courant électrique 29, ces composants électroniques et/ou électriques peuvent par exemple comporter le microcontrôleur, des moyens de raccord électrique 30 comprenant des connecteurs électriques reliant les résistances chauffantes 17 aux interrupteurs de courant électrique 29, des connecteurs d'alimentation haute tension 31 et un connecteur d'alimentation basse tension et de bus de données 33 (cf figures 1 et 3).

On peut prévoir de plus des moyens de positionnement 35 du support de circuit électrique 27 tels que des moyens de clipsage par exemple agencés aux quatre coins du support de circuit électrique 27.

Comme dit précédemment, un moyen d'interruption de courant 7 permet de couper l'alimentation en courant lorsque la température du corps chauffant 13a, 13b atteint un seuil de température prédéfini critique pour le fonctionnement correct du module de chauffe 3a ou 3b respectif.

On peut prévoir un moyen d'interruption de courant 7 associé à un corps chauffant 13a ou 13b respectif, ou en variante un moyen d'interruption de courant pour les deux corps chauffants 13a et 13b.

Selon un premier mode de réalisation illustré sur la figure 3, on prévoit un moyen d'interruption de courant 7 pour un corps chauffant 13a ou 13b associé.

Selon ce premier mode de réalisation, le moyen d'interruption de courant 7 est agencé directement sur le corps chauffant 13a ou 13b associé.

Plus précisément, ce moyen d'interruption de courant 7 est agencé sur la surface externe du corps chauffant 13a, 13b respectif, donc hors du circuit de guidage du fluide à chauffer.

À cet effet, au moins une piste résistive 17 est interrompue en au moins deux portions de piste : une première portion de piste 17₁ et une deuxième portion de piste 17₂, et le moyen d'interruption de courant 7 est agencé en contact électrique avec ces deux portions de piste 17₁ et 17₂.

Selon ce premier mode de réalisation, le moyen d'interruption de courant 7 comprend un thermofusible 37 agencé en contact avec les deux portions de piste 17₁ et 17₂.

Le thermofusible 37 est ici réalisé sous la forme d'une bande en matériau thermofusible agencée en contact avec les deux portions de pistes 17₁ et 17₂ et en contact avec la surface externe du corps chauffant 13a ou 13b associé.

Pour cela, la bande en matériau thermofusible 37 présente une première extrémité agencée sur la première portion de piste 17₁ et une deuxième extrémité agencée sur la deuxième portion de piste 17₂. La fixation des extrémités de la bande en matériau thermofusible 37 respectivement à chaque portion de piste 17₁, 17₂ est par exemple obtenue par soudage.

Bien entendu, la bande en matériau thermofusible 37 est réalisée dans un matériau conducteur d'électricité de façon à permettre le passage du courant entre les deux portions de piste 17₁ et 17₂ en fonctionnement normal.

Cette bande en matériau thermofusible 37 est apte à fondre au moins partiellement lorsque la zone du corps chauffant 13a ou 13b associé, plus précisément la zone de la surface externe du corps chauffant 13a ou 13b en contact avec le thermofusible 37 atteint le seuil de température prédéfini.

Le matériau thermofusible est choisi avec une plage de température de fonctionnement compatible avec la plage de température de fonctionnement normal du corps chauffant 13a ou 13b respectif et avec une température de fusion correspondant au seuil de température prédéfini critique du corps chauffant 13a, 13b, afin d'éviter une fusion prématurée de la bande en matériau thermofusible 37. La plage de températures critiques pour le corps chauffant est par exemple de 150 °C à 250°C, de préférence de l'ordre de 160°C à 230°C.

Lors d'une surchauffe, c'est-à-dire que le corps chauffant correspondant 13a ou 13b atteint le seuil de température prédéfini, la bande en matériau thermofusible 37 fond de sorte que la liaison électrique n'est plus assurée entre les portions de piste 17₁ et 17₂. Le circuit électrique d'alimentation de la résistance chauffante 17 associée est donc ouvert. L'alimentation en courant est interrompue.

Le matériau thermofusible est par exemple un matériau en alliage eutectique.

Bien entendu, on peut prévoir d'interrompre les deux pistes résistives 17 d'un corps chauffant 13a ou 13b et de disposer une bande respective en matériau thermofusible 37 pour chaque piste résistive 17 interrompue.

On peut aussi prévoir d'interrompre une piste résistive 17 à plusieurs endroits sur le corps chauffant 13a ou 13b correspondant. Plus on interrompt la piste, par exemple entre deux et cinq fois, plus on augmente la robustesse.

Un deuxième mode de réalisation du moyen d'interruption de courant 107 est illustré sur les figures 5 et 6.

De façon similaire au premier mode de réalisation, on prévoit un moyen d'interruption de courant 107 pour un corps chauffant 13a ou 13b associé agencé directement sur la surface externe du corps chauffant 13a ou 13b associé de façon à interrompre une piste 17 correspondante en au moins deux portions de piste 17₁ et 17₂.

Ce deuxième mode de réalisation diffère du premier mode de réalisation en ce que le moyen d'interruption de courant ne comprend plus une bande en matériau thermofusible reliant les deux portions 17₁ et 17₂ de la piste 17 interrompue.

Selon ce deuxième mode de réalisation, le moyen d'interruption de courant 107 comprend un thermofusible 137 relié électriquement à la première portion de piste 17₁ et un moyen de rappel élastique 139 relié électriquement d'une part au thermofusible 137 et d'autre part à une deuxième portion de piste 17₂.

Bien entendu, le thermofusible 137 et le moyen de rappel élastique 139 sont réalisés dans des matériaux conducteurs d'électricité de façon à fermer le circuit d'alimentation de la résistance chauffante 17 correspondante en fonctionnement normal.

Le moyen de rappel élastique 139 est par exemple réalisé en cuivre ou en alliage cuivreux. Ce choix de matériau offre une forte conductibilité thermique et une faible résistance thermique.

Selon l'exemple illustré, le moyen de rappel élastique 139 présente une première extrémité 141 connectée au thermofusible 137 et une deuxième extrémité 143 connectée mécaniquement et électriquement à la première portion de piste 17₁, ainsi qu'un corps 145 reliant les deux extrémités 141 et 143, par exemple de forme sensiblement en arc de cercle.

Le thermofusible 137 est par exemple réalisé sous la forme d'une soudure, et connecte électriquement et mécaniquement le moyen de rappel élastique 139 à la deuxième portion de piste 17₂.

Le moyen de rappel élastique 139 peut être fixé à la première portion de piste 17₁ par tout moyen approprié par rapport aux températures du corps chauffant, par exemple par soudure.

Comme précédemment, le matériau du thermofusible 137 est choisi avec une plage de température compatible avec la plage de température de fonctionnement normal du corps chauffant 13a ou 13b respectif et avec une température de fusion correspondant au seuil de température prédéfini critique du corps chauffant 13a, 13b.

Le moyen de rappel élastique 139 est maintenu connecté mécaniquement et électriquement à la deuxième portion de piste 17₂ via cette soudure dans la plage de températures de fonctionnement du corps chauffant associé 13a ou 13b. En effet, le thermofusible 137, par exemple sous forme de soudure, exerce une force de maintien sur la première extrémité 141 du moyen de rappel élastique 139 tant que la température de la zone du corps chauffant 13a, 13b en contact avec le thermofusible 137 n'a pas dépassée le seuil critique de température.

Lorsque le corps chauffant correspondant 13a ou 13b atteint le seuil de température prédéfini, le thermofusible 137 fond de sorte que le moyen de rappel élastique n'est plus en contact mécanique avec la deuxième portion de piste 17₂. En effet, la force de maintien du thermofusible 137 n'est plus exercée sur le moyen de rappel élastique 139.

Le moyen de rappel élastique 139 est alors rappelé dans une position de repos éloignée de la deuxième portion de piste 17₂ selon une force de rappel illustrée par la flèche F sur la figure 6. La position de repos du moyen de rappel élastique 139 après fusion du thermofusible 137 est schématisée en pointillés sur la figure 6.

La connexion électrique entre la deuxième portion de piste 17₂ et le moyen de rappel élastique 139 est rompue de sorte que la liaison électrique n'est plus assurée entre les portions de piste 17₁ et 17₂. Le circuit électrique d'alimentation de la résistance chauffante 17 associée est donc ouvert. L'alimentation en courant est interrompue.

Selon, un troisième mode de réalisation schématisé sur la figure 7, les moyens d'interruption de courant 207 comprennent au moins un thermofusible 237 qui peut être réalisé sous la forme d'une soudure reliant deux portions 17₁ et 17₂ d'une piste résistive 17 interrompue.

Le ou les thermofusibles 237 ont une plage de température de fonctionnement compatible avec la plage de température de fonctionnement normal du corps chauffant 13a ou 13b respectif et une température de fusion correspondant au seuil de température prédéfini critique du corps chauffant 13a, 13b, afin d'éviter une ouverture prématurée du circuit d'alimentation de la ou des résistances chauffantes 17.

On comprend donc qu'un corps chauffant 13a, 13b comprenant un moyen d'interruption de courant 7, 107 ou 207 agencé directement sur le corps chauffant 13a, 13b en interrompant une ou plusieurs pistes résistives 17 permet d'ouvrir le circuit d'alimentation en cas de surchauffe du corps chauffant 13a, 13b de façon simple et rapide.

La fonction fusible est donc sur le corps chauffant 13a, 13b directement, il n'y a pas de pièce supplémentaire à prévoir.

Selon un quatrième mode de réalisation, représenté sur les figures 8 à 10, le moyen d'interruption de courant 307 n'est plus agencé directement sur le corps chauffant 13a ou 13b associé en interrompant les pistes résistives 17. Dans ce cas les pistes résistives 17 ne sont donc pas interrompues comme l'illustre la figure 8. La fonction d'interruption de courant est réalisée par le moyen de raccord électrique 330 schématisé en pointillés sur la figure 9. En effet, le moyen de raccord électrique 330 comprend un moyen d'interruption de courant 307.

Plus précisément, le moyen d'interruption de courant 307 est agencé sur le connecteur électrique 347 reliant le corps chauffant 13a ou 13b au moyen de commande, par exemple à un interrupteur de courant électrique 29 associé.

Ce moyen d'interruption de courant 307 associé à un corps chauffant 13a ou 13b est apte à :
- connecter mécaniquement le connecteur électrique 307 au corps chauffant 13a ou 13b associé lorsque la température du corps chauffant est inférieure au seuil de température prédéfini et
- ouvrir le circuit de courant entre le connecteur électrique et le corps chauffant lorsque la température du corps chauffant atteint le seuil de température prédéfini

En référence à la figure 10, le moyen d'interruption de courant 307 comprend au moins un thermofusible 337, par exemple réalisé sous la forme d'une soudure. Le thermofusible 337 permet de connecter mécaniquement et électriquement le connecteur électrique 347 au corps chauffant 13a ou 13b.

Selon le quatrième mode de réalisation, le thermofusible 337 connecte mécaniquement et électriquement le connecteur électrique 347 à une borne de connexion 18 du corps chauffant 13a ou 13b associé.

Selon l'exemple illustré, le thermofusible 337 connecte mécaniquement et électriquement une portion de contact 348 du connecteur électrique 347 présentant par exemple une forme sensiblement pliée.Le thermofusible 337, par exemple sous forme de soudure, est apte à fondre lorsque la zone du corps chauffant 13a ou 13b associé, plus précisément la zone de la surface externe du corps chauffant 13a ou 13b en contact avec le thermofusible 337 atteint le seuil de température prédéfini.

Le matériau thermofusible est choisi avec une plage de température de fonctionnement compatible avec la plage de température de fonctionnement normal du corps chauffant 13a ou 13b respectif et avec une température de fusion correspondant au seuil de température prédéfini critique du corps chauffant 13a, 13b, afin d'éviter une fusion prématurée du thermofusible 337. La température de fusion est par exemple de l'ordre de 160°C.

Lors d'une surchauffe, c'est-à-dire que le corps chauffant correspondant 13a ou 13b atteint le seuil de température prédéfini, le thermofusible 337 fond de sorte que le connecteur électrique 347 n'est plus maintenu mécaniquement contre la borne 18 du corps chauffant 13a ou 13b associé.

La position du connecteur électrique 347 après fusion du thermofusible 337 est schématisée en pointillés sur la figure 10.

La connexion électrique entre le connecteur électrique 347 et la borne de connexion 18 du corps chauffant 13a ou 13b associé n'est plus assurée. Le circuit électrique d'alimentation de la résistance chauffante 17 associée est donc ouvert. L'alimentation en courant est interrompue.

Ainsi, le connecteur électrique 347 est mobile entre :
- une première position d'alimentation dans laquelle le connecteur électrique 347 est en contact électrique avec la borne d'alimentation 18 du corps chauffant 13a ou 13b correspondant et
- une deuxième position de coupure d'alimentation dans laquelle le connecteur électrique 347 est à distance de la borne d'alimentation 18 du corps chauffant 13a ou 13b correspondant.

Le matériau du connecteur électrique 347 est donc choisi avec des propriétés élastiques de façon à revenir en deuxième position de coupure lorsque le thermofusible 337 formant moyen de maintien mécanique du connecteur électrique 347 fond.

Selon une variante illustrée sur les figures 11a, 11b, on peut prévoir un moyen de rappel élastique 349 du connecteur électrique 347 depuis la position d'alimentation (figure 11a) vers la position de coupure d'alimentation (figure 11b) après que le thermofusible a fondu.

Ce moyen de rappel élastique 349 permet d'éviter un contact électrique involontaire entre le connecteur électrique 347 et la borne de connexion 18 du corps chauffant correspondant 13a ou 13b, après ouverture du circuit d'alimentation.

Selon un cinquième mode de réalisation représenté sur la figure 12, le connecteur électrique 447 comprend une première et une deuxième portions 450, 448, la première portion dite de maintien 450 comprenant un thermofusible 437 et la deuxième portion est dite de contact 448. Le thermofusible 437, par exemple réalisé par soudure, connecte mécaniquement le connecteur électrique 447 contre le corps chauffant 13a, 13b de sorte que la portion de contact 448, par exemple sensiblement pliée, soit maintenue en contact contre la borne de connexion 18 du corps chauffant 13a ou 13b associé.

Ce cinquième mode de réalisation diffère donc du quatrième mode de réalisation en ce que le thermofusible 437 maintient mécaniquement une portion de maintien 450 du connecteur électrique 447 contre le corps chauffant 13a, 13b. La portion de maintien 450 est agencée contre le corps chauffant 13a, 13b sur une zone d'appui en dehors des bornes de connexion 18.

La portion de maintien 450 et la portion de contact 448 sont conformées de sorte que la portion de maintien 450 est en appui contre une zone du corps chauffant 13a ou 13b, et que la portion de contact 448 est en appui contre une borne de connexion 18 du corps chauffant 13a ou 13b correspondant.

Lorsque le thermofusible 437 fond, la portion de maintien 450 n'est plus maintenue contre le corps chauffant 13a ou 13b correspondant, et la portion de contact 448 est déconnectée de la borne de connexion 18.

Comme précédemment, la position du connecteur électrique 447 après fusion du thermofusible 437 est schématisée en pointillés sur la figure 12. La connexion électrique entre le connecteur électrique 447 et la borne de connexion 18 du corps chauffant 13a ou 13b associé n'est donc plus assurée. Le circuit électrique d'alimentation de la résistance chauffante 17 associée est donc ouvert. L'alimentation en courant est interrompue.

Ainsi, le connecteur électrique 447 est mobile entre :
- une première position d'alimentation dans laquelle la portion de maintien 450 et la portion de contact 448 sont en appui contre le corps chauffant 13a ou 13b correspondant et
- une deuxième position de coupure d'alimentation dans laquelle le connecteur électrique 447 est à distance de la borne d'alimentation 18 du corps chauffant 13a ou 13b correspondant.

De façon similaire au quatrième mode de réalisation, on peut prévoir un moyen de rappel élastique 449 du connecteur électrique 447 depuis la position d'alimentation vers la position de coupure d'alimentation après que le thermofusible a fondu.

Un sixième mode de réalisation représenté de façon partielle et schématique sur la figure 13 diffère du quatrième mode de réalisation en ce que le moyen d'interruption de courant comprend un moyen de maintien 538 du thermofusible 537 de façon à former un verrou mécanique pour maintenir le connecteur électrique 547 contre le corps chauffant 13a ou 13b associé.

Ce verrou mécanique assure le maintien mécanique du connecteur électrique 547 contre le corps chauffant 13a ou 13b associé, permettant la connexion électrique entre le connecteur électrique 547 et la borne de connexion 18 du corps chauffant 13a, 13b. La connexion électrique étant similaire au quatrième ou cinquième mode de réalisation, à savoir soit le connecteur électrique 547 est maintenu en contact directement contre une borne de connexion 18 du corps chauffant 13a, 13b, soit une portion de maintien est maintenue contre le corps chauffant de sorte qu'une portion de contact vienne en contact avec la borne de connexion 18.

Cette solution de verrou mécanique est une alternative permettant de s'affranchir de la soudure entre le connecteur électrique et le corps chauffant, tel que décrit précédemment.

Lorsque le corps chauffant 13a, 13b atteint le seuil de température prédéfini, le thermofusible 537 fond de sorte que le connecteur électrique 547 n'est plus maintenu mécaniquement, la liaison électrique n'est plus assurée, et donc le circuit d'alimentation de la résistance chauffante 17 ouvert.

Enfin, un septième mode de réalisation est représenté de façon schématique sur les figures 14a et 14b.

Le dispositif de chauffage comprend au moins deux corps chauffants 13a, 13b, et le connecteur électrique 647 est par exemple relié aux deux corps chauffants 13a et 13b.

Selon ce septième mode de réalisation, le connecteur électrique 647 comprend des premières pattes de connexion 651 reliées électriquement au moyen de commande 5, par exemple via le support de circuit électrique 27, et des deuxièmes pattes de connexion 653 mobiles.

Ces deuxièmes pattes de connexion 653 sont mobiles entre :
- une première position de contact avec une borne de connexion 18 d'un corps chauffant 13a, 13b (figure 14a) et
- une deuxième position de retrait (figure 14b) dans laquelle les pattes de connexion sont à distance des bornes de connexion 18 de façon à ouvrir le circuit électrique.

En position de retrait, les deuxièmes pattes de connexion sont par exemple rétractées à l'intérieur du corps du connecteur électrique 647 par exemple à l'aide d'un bilame associé à mécanisme de type ressort.

On peut prévoir par exemple un champignon 655 rétractable qui soit accessible à la surface externe du connecteur électrique 647 lorsque les deuxièmes pattes de connexion 653 sont rétractées à l'intérieur du corps du connecteur 647. Et, lorsque ce champignon 653 est rétracté à l'intérieur du corps de connecteur 647 les deuxièmes pattes de connexion 653 font saillies par rapport au corps de connecteur 647 pour venir en contact avec les bornes de connexion 18 des corps chauffants 13a, 13b.

Cette solution est une alternative à la fonction fusible précédemment décrite. En effet, contrairement aux quatrième, cinquième et sixième modes de réalisation, la fonction interruption de courant du moyen de raccord électrique n'est pas une fonction fusible, mais est réalisée par des pattes de connexion rétractables.

On comprend donc qu'un module de chauffe 3a, 3b dont la fonction d'interruption de courant est assurée par le moyen de raccord électrique 330 entre le ou les corps chauffants 13a, 13b et le moyen de commande 5, par exemple un ou des interrupteurs de courant électrique 29, permet également d'arrêter le chauffage rapidement en cas de surchauffe du corps chauffant 13a, 13b.

Avec une telle solution, il n'est donc pas nécessaire de prévoir une pièce supplémentaire rapportée pour réaliser la fonction d'interruption de courant.

## Revendications

1. Dispositif de chauffage électrique de fluide pour véhicule automobile, comprenant :
- au moins un corps chauffant (13 ; 13b) présentant au moins une résistance chauffante réalisée sous la forme d'une piste résistive (17),
- un moyen de commande électrique (5) du corps chauffant (13a; 13b) relié électriquement à la piste résistive (17), et
- au moins un moyen d'interruption de courant (7 ; 107 ; 207) lorsque la température du corps chauffant (13a ; 13b) atteint un seuil de température prédéfini,
**caractérisé en ce que** :
- au moins une piste résistive (17) est interrompue et présente au moins deux portions de piste (17₁, 17₂), et **en ce que**
- ledit au moins un moyen d'interruption de courant (7 ; 107 ; 207) est agencé sur le corps chauffant (13a ; 13b) entre deux portions (17₁, 17₂) d'une piste résistive (17) interrompue et comprend au moins un thermofusible (37 ; 137 ; 237).

2. Dispositif de chauffage selon la revendication 1, dans lequel la piste résistive (17) est réalisée par sérigraphie sur la surface externe du corps chauffant (13a ; 13b).

3. Dispositif de chauffage selon la revendication 2, dans lequel le corps chauffant (13a ; 13b) est sensiblement cylindrique.

4. Dispositif de chauffage selon l'une des revendications 1 à 3, dans lequel la piste résistive (17) s'étend au moins partiellement sur la surface externe du corps chauffant (13a ; 13b).

5. Dispositif de chauffage selon l'une quelconque des revendications 1 à 4, dans lequel le thermofusible (37) est réalisé sous la forme d'une bande en matériau thermofusible comprenant une première extrémité en contact avec une première portion de piste (17₁) et une deuxième extrémité en contact avec la deuxième portion de piste (17₂).

6. Dispositif de chauffage selon l'une quelconque des revendications 1 à 4, dans lequel le moyen d'interruption de courant (107) comprend :
- un thermofusible (137) en contact avec une première portion de piste (17₁) et
- un moyen de rappel élastique (139) relié d'une part au thermofusible (137) et d'autre part à une deuxième portion de piste (17₂).

7. Dispositif de chauffage selon l'une quelconque des revendications précédentes, dans lequel le thermofusible (237) est réalisé sous la forme d'une soudure.

8. Dispositif de chauffage selon l'une quelconque des revendications précédentes, dans lequel la température de fusion du thermofusible (37 ; 137 ; 237) est comprise entre 150°C et 250°C.

9. Dispositif de chauffage selon l'une quelconque des revendications précédentes, dans lequel un module de chauffe (3a ; 3b) comprend un noyau (11) et le corps chauffant (13a ; 13b) est agencé de façon à entourer le noyau (11) pour définir un circuit de guidage du fluide autour du noyau (11).

10. Dispositif de chauffage selon l'une quelconque des revendications précédentes, comprenant deux modules de chauffe (3a ; 3b) agencés côte à côte et comprenant un boîtier d'entrée de fluide (9a) et un boîtier de sortie de fluide (9b) communiquant respectivement avec les deux modules de chauffe (3a ; 3b).

11. Circuit de chauffage d'un habitacle de véhicule **caractérisé en ce qu'**il comprend un dispositif de chauffage selon l'une quelconque des revendications 1 à 10.

12. Appareil de chauffage et/ou climatisation pour véhicule automobile, **caractérisé en ce qu'**il comprend au moins un dispositif de chauffage (1) selon l'une quelconque des revendications 1 à 10.

## Patentansprüche

1. Vorrichtung zur elektrischen Erwärmung eines Fluids für ein Kraftfahrzeug, welche umfasst:
- wenigstens einen Heizkörper (13; 13b), der wenigstens einen Heizwiderstand aufweist, der in der Form einer Widerstandsbahn (17) ausgebildet ist,
- ein Mittel zur elektrischen Steuerung (5) des Heizkörpers (13a; 13b), das mit der Widerstandsbahn (17) elektrisch verbunden ist, und
- wenigstens ein Mittel zur Stromunterbrechung (7; 107; 207), wenn die Temperatur des Heizkörpers (13a; 13b) einen vordefinierten Temperaturschwellenwert erreicht,
**dadurch gekennzeichnet, dass**
- wenigstens eine Widerstandsbahn (17) unterbrochen ist und wenigstens zwei Bahnabschnitte (17₁, 17₂) aufweist, und dadurch, dass
- das wenigstens eine Mittel zur Stromunterbrechung (7; 107; 207) auf dem Heizkörper (13a; 13b) zwischen zwei Abschnitten (17₁, 17₂) einer unterbrochenen Widerstandsbahn (17) angeordnet ist und wenigstens eine Thermoschmelzsicherung (37; 137; 237) umfasst.

2. Vorrichtung zur Erwärmung nach Anspruch 1, wobei die Widerstandsbahn (17) durch Siebdruck auf der Außenfläche des Heizkörpers (13a; 13b) hergestellt ist.

3. Vorrichtung zur Erwärmung nach Anspruch 2, wobei der Heizkörper (13a, 13b) im Wesentlichen zylindrisch ist.

4. Vorrichtung zur Erwärmung nach einem der Ansprüche 1 bis 3, wobei sich die Widerstandsbahn (17) wenigstens teilweise auf der Außenfläche des Heizkörpers (13a; 13b) erstreckt.

5. Vorrichtung zur Erwärmung nach einem der Ansprüche 1 bis 4, wobei die Thermoschmelzsicherung (37) in der Form eines Bandes aus wärmeschmelzbarem Material ausgebildet ist, welches ein erstes Ende, das sich mit einem ersten Bahnabschnitt (17₁) in Kontakt befindet, und ein zweites Ende, das sich mit dem zweiten Bahnabschnitt (17₂) in Kontakt befindet, umfasst.

6. Vorrichtung zur Erwärmung nach einem der Ansprüche 1 bis 4, wobei das Mittel zur Stromunterbrechung (107) umfasst:
- eine Thermoschmelzsicherung (137), die sich mit einem ersten Bahnabschnitt (17₁) in Kontakt befindet, und
- ein elastisches Rückholmittel (139), das einerseits mit der Thermoschmelzsicherung (137) und andererseits mit einem zweiten Bahnabschnitt (17₂) verbunden ist.

7. Vorrichtung zur Erwärmung nach einem der vorhergehenden Ansprüche, wobei die Thermoschmelzsicherung (237) in der Form einer Schweißverbindung ausgebildet ist.

8. Vorrichtung zur Erwärmung nach einem der vorhergehenden Ansprüche, wobei die Schmelztemperatur der Thermoschmelzsicherung (37; 137; 237) zwischen 150 °C und 250 °C liegt.

9. Vorrichtung zur Erwärmung nach einem der vorhergehenden Ansprüche, wobei ein Erwärmungsmodul (3a; 3b) einen Kern (11) umfasst und der Heizkörper (13a; 13b) derart angeordnet ist, dass er den Kern (11) umgibt, um einen Kreislauf zur Führung des Fluids um den Kern (11) herum zu definieren.

10. Vorrichtung zur Erwärmung nach einem der vorhergehenden Ansprüche, welche zwei Erwärmungsmodule (3a; 3b) umfasst, die nebeneinander angeordnet sind und ein Fluideintrittsgehäuse (9a) und ein Fluidaustrittsgehäuse (9b) umfassen, die jeweils mit einem der beiden Erwärmungsmodule (3a; 3b) in Verbindung stehen.

11. Anlage zur Erwärmung eines Fahrgastraums eines Fahrzeugs, **dadurch gekennzeichnet, dass** sie eine Vorrichtung zur Erwärmung nach einem der Ansprüche 1 bis 10 umfasst.

12. Heiz- und/oder Klimagerät für ein Kraftfahrzeug, **dadurch gekennzeichnet, dass** sie wenigstens eine Vorrichtung zur Erwärmung (1) nach einem der Ansprüche 1 bis 10 umfasst.

## Claims

1. Device for the electric heating of fluid for a motor vehicle, comprising:
- at least one heating body (13; 13b) having at least one heating resistor created in the form of a resistive track (17),
- an electric control means (5) for the heating body (13a; 13b) electrically connected to the resistive track (17), and
- at least one means (7; 107; 207) for interrupting current when the temperature of the heating body (13a; 13b) reaches a predefined temperature threshold;
**characterized in that**
- at least one resistive track (17) is interrupted and has at least two track portions (17₁, 17₂), and **in that**
- said at least one current interruption means (7; 107; 207) is arranged on the heating body (13a; 13b) between two portions (17₁, 17₂) of an interrupted resistive track (17) and comprises at least one thermal fuse (37; 137; 237).

2. Heating device according to Claim 1, in which the resistive track (17) is created by screen printing on the outer surface of the heating body (13a; 13b) .

3. Heating device according to Claim 2, in which the heating body (13a; 13b) is essentially cylindrical.

4. Heating device according to one of Claims 1 to 3, in which the resistive track (17) extends at least partially over the outer surface of the heating body (13a; 13b).

5. Heating device according to any one of Claims 1 to 4, in which the thermal fuse (37) is created in the form of a band of hot-melt material comprising a first end in contact with a first track portion (17₁) and a second end in contact with the second track portion (17₂).

6. Heating device according to any one of Claims 1 to 4, in which the current interruption means (107) comprises:
- a thermal fuse (137) in contact with a first track portion (17₁) and
- an elastic return means (139) connected at one end to the thermal fuse (137) and at the other end to a second track portion (17₂).

7. Heating device according to any one of the preceding claims, in which the thermal fuse (237) is created in the form of a soldered joint.

8. Heating device according to any one of the preceding claims, in which the melting point of the thermal fuse (37; 137; 237) is between 150°C and 250°C.

9. Heating device according to any one of the preceding claims, in which a heating module (3a; 3b) comprises a core (11) and the heating body (13a; 13b) is arranged so as to surround the core (11) to define a circuit for guiding the fluid around the core (11).

10. Heating device according to any one of the preceding claims, comprising two heating modules (3a; 3b) arranged side-by-side and comprising a fluid inlet casing (9a) and a fluid outlet casing (9b) that respectively communicate with the two heating modules (3a; 3b).

11. Heating circuit for a vehicle interior, **characterized in that** it comprises a heating device according to any one of Claims 1 to 10.

12. Heating and/or air-conditioning apparatus for a motor vehicle, **characterized in that** it comprises at least one heating device (1) according to any one of Claims 1 to 10.
